# EUROPEAN PATENT APPLICATION

(11) **EP 4 509 962 A1**
(43) Date of publication of application: **19.02.2025**
(21) Application number: 24194779.5
(22) Date of filing: 15.08.2024
(51) Int. Cl.: G06F 3/01, G06F 3/04815, G06F 3/0484

(54) **METHOD, APPARATUS, ELECTRONIC DEVICE, AND STORAGE FOR MEDIUM EXTENDED REALITY-BASED INTERACTION CONTROL**

(30) Priority: 18.08.2023 CN 202311042854
(71) Applicant: Beijing Zitiao Network Technology Co., Ltd., Beijing 100190 (CN)
(72) Inventor: YANG, Piao, Beijing 100028 (CN)
(74) Representative: Dentons UK and Middle East LLP

(57) **Abstract**

An extended reality-based interaction control method and apparatus, an electronic device, and a storage medium are provided. By displaying (S120) a virtual reality space, performing (S140) a first class operation in the virtual reality space in response to an instruction inputted by a first human-computer control mode; and performing (S 160), in a first interface displayed in the virtual reality space, a second class operation corresponding to the first interface in response to an instruction inputted by a second human-computer control mode, users can interact with each other in the virtual reality space by using the first human-computer control mode, and an interaction operation performed on the first interface can be performed through the second human-computer control mode, thereby improving the interaction efficiency; and the targeted second class operation cannot affect the first class operation.

## Description

### FIELD

The present disclosure relates to the technical field of computers, in particular, to method and apparatus, electronic device, and storage medium for extended reality-based interaction control.

### BACKGROUND

An Extended Reality (XR) technology can combine reality with virtuality through a computer, to provide users with a virtual reality space for human-computer interactions.

In the related extended reality technologies, a head mount display (HMD) and matching gamepads are typically used for interaction and control by the users. However, in many application scenarios, when a user activates a ray function of one gamepad, to avoid interference, caused by another gamepad, with the ray operation of the gamepad, the another gamepad is usually set to an unavailable state. As a result, the another gamepad is not fully used, and the gamepad-based control efficiency in an extended reality application scenario is reduced.

### SUMMARY

Providing the summary section of this invention briefly introduces the concepts, and these concepts will be described in detail in the detailed description section later. The summary section of this invention neither intends to identify key or necessary features of the technical solutions claimed, nor to limit the scope of the technical solutions claimed.

In a first aspect, according to one or more embodiments of the present disclosure, an extended reality-based interaction control method is provided, including:
displaying a virtual reality space;
performing a first class operation in the virtual reality space in response to an instruction inputted by a first human-computer control mode; and
performing, in a first interface displayed in the virtual reality space, a second class operation corresponding to the first interface in response to an instruction inputted by a second human-computer control mode.

In a second aspect, according to one or more embodiments of the present disclosure, an extended reality-based interaction control apparatus is provided, including:
a display unit, configured to display a virtual reality space;
a first control unit, configured to perform a first class operation in the virtual reality space in response to an instruction inputted by a first human-computer control mode; and
a second control unit, configured to perform, in a first interface displayed in the virtual reality space, a second class operation corresponding to the first interface in response to an instruction inputted by a second human-computer control mode.

In a third aspect, according to one or more embodiments of the present disclosure, an electronic device is provided, including: at least one memory and at least one processor, wherein the memory is configured to store a program code; the processor is configured to call the program code stored in the memory to cause the electronic device to perform the extended reality-based interaction control method provided according to one or more embodiments of the present disclosure.

In a fourth aspect, according to one or more embodiments of the present disclosure, a non-transient computer storage medium is provided, having a program code stored thereon, wherein the program code, when executed by a computer device, causes the computer device to perform the extended reality-based interaction control method provided according to one or more embodiments of the present disclosure.

According to one or more embodiments of the present disclosure, by performing a first class operation in the virtual reality space in response to an instruction inputted by a first human-computer control mode; and performing, in a first interface displayed in the virtual reality space, a second class operation corresponding to the first interface in response to an instruction inputted by a second human-computer control mode, users can interact with each other in the virtual reality space by using the first human-computer control mode, and an interaction operation performed on the first interface can be performed through the second human-computer control mode, thereby improving the interaction efficiency; and the targeted second class operation cannot affect the first class operation.

### BRIEF DESCRIPTION OF THE DRAWINGS

The above and other features, advantages, and aspects of the various embodiments of the present disclosure will become more apparent by combining the accompanying drawings and referring to the following specific implementations. Throughout the accompanying drawings, identical or similar reference numerals represent identical or similar elements. It should be understood that the accompanying drawings are illustrative, and components and elements may not necessarily be drawn to scale.
FIG. 1 is a flowchart of an extended reality-based interaction control method provided according to an embodiment of the present disclosure;
FIG. 2 is a schematic diagram of an extended reality device according to an embodiment of the present disclosure;
FIG. 3 is an optional schematic diagram of a virtual field of view of an extended reality device provided according to an embodiment of the present disclosure;
FIG. 4 is a schematic diagram of a first interface provided according to an embodiment of the present disclosure;
FIG. 5 is a schematic diagram of a first interface provided according to another embodiment of the present disclosure;
FIG. 6 is a schematic diagram of a first interface provided according to still another embodiment of the present disclosure;
FIG. 7 is a schematic diagram of a first interface provided according to yet another embodiment of the present disclosure;
FIG. 8 is a schematic structural diagram of an extended reality-based interaction control apparatus provided according to an embodiment of the present disclosure; and
FIG. 9 is a schematic structural diagram of an electronic device provided according to an embodiment of the present disclosure.

### DETAILED DESCRIPTION OF EMBODIMENTS

The embodiments of the present disclosure will be described in detail below with reference to the accompanying drawings. Although the accompanying drawings show some embodiments of the present disclosure, it should be understood that the present disclosure can be implemented in various forms, and should not be explained as being limited to the embodiments stated herein. Rather, these embodiments are provided for understanding the present disclosure more thoroughly and completely. It should be understood that the accompanying drawings and embodiments of the present disclosure are only used for illustration, but are not intended to limit the protection scope of the present disclosure.

It should be understood that the steps recorded in the implementations of the present disclosure can be executed in different orders and/or in parallel. In addition, the implementations may include additional steps and/or omit the execution of the steps shown. The scope of the present disclosure is not limited in this aspect.

The term "include" and its variants as used herein mean widespread inclusion, namely, "including but not limited to". The term "based on" is "based at least in part on". The term "one embodiment" means "at least one embodiment". The term "another embodiment" means "at least another embodiment". The term "some embodiments" means "at least some embodiments". The phrase "in response to" and related terms mean a signal or event being affected to a certain extent by another signal or event, but not necessarily completely or directly. If event x occurs "in response to" event y, x can make a direct or indirect response to y. For example, the appearance of y may ultimately lead to the appearance of x, but there may be other intermediate events and/or conditions. In other cases, y may not necessarily lead to the occurrence of x. Even if y has not yet occurred, x may still occur. In addition, the phrase "in response to" may alternatively mean "in response at least partially to".

The term "determine" encompasses a wide range of actions, including obtaining, calculation, computation, processing, deduction, research, search (e.g. looking for in tables, databases, or other data structures), exploration, and similar actions. It may further include receiving (e.g. receiving information), accessing (e.g. accessing data in a memory), and similar actions, as well as parsing, selection, clicking, establishment, and similar actions. Relevant definitions of other terms will be given in the description below. Relevant definitions of other terms will be given in the description below.

It should be noted that the concepts such as "first" and "second" mentioned in the present disclosure are only used to distinguish different apparatuses, modules, or units, and are not intended to limit the order or interdependence of the functions performed by these apparatuses, modules, or units.

It should be noted that the modifications of "one" and "plurality" mentioned in the present disclosure are indicative rather than restrictive, and those skilled in the art should understand that unless otherwise explicitly stated in the context, they should be understood as "one or more".

For the purpose of the present disclosure, the phrase "A and/or B" means (A), (B), or (A and B).

Messages or names of information exchanged between a plurality of apparatuses in the implementations of the present disclosure are only for illustrative purposes and are not intended to limit the messages or the scope of the information.

An extended reality-based interaction control method provided according to one or more embodiments of the present disclosure uses an extended reality (XR) technology. The XR technology can combine reality with virtuality through a computer, to provide users with a virtual reality space for human-computer interactions. In the virtual reality space, a user can engage in social interactions, entertainment, learning, working, telecommuting, creation of User Generated Content (UGC), and the like through extended reality devices such as a Head Mount Display (HMD).

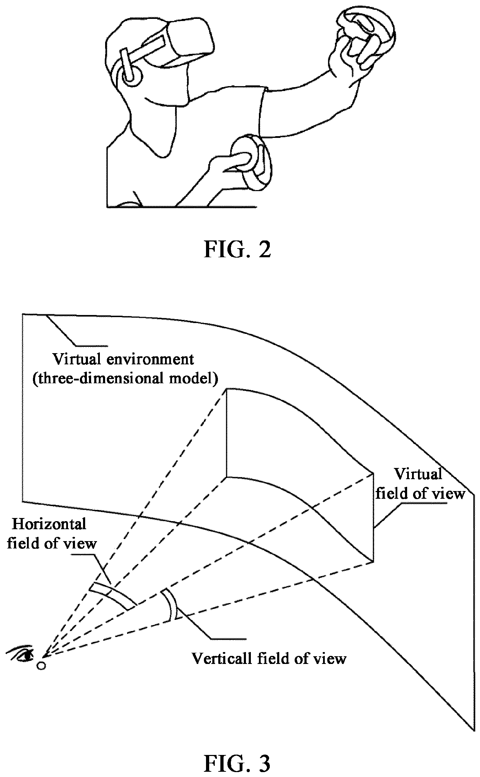

Referring to FIG. 2, a user may enter the virtual reality space through the extended reality device such as head mount VR glasses, and control the avatar of the user in the virtual reality space to engage in social interaction, entertainment, learning, telecommuting, and other activities with the avatars controlled by other users.

In an embodiment, in the virtual reality space, a user may perform related interaction operations through a controller. The controller may be a gamepad. For example, the user may carry out related operation control by manipulating buttons on the gamepad. Of course, in other embodiments, gestures, voices, or a multimodal control mode may alternatively be used to control a controllable object in an extended reality device without using a controller.

The extended reality device recorded in this embodiment of the present disclosure may include, but is not limited to, the following types:
a personal computer extended reality (PCVR) device, which uses a PC to perform related computations and data outputting for an extended reality function, where an external personal computer extended reality device uses data output by the PC to achieve an extended reality effect;
a mobile extended reality device, which supports setting a mobile terminal (such as a smartphone) in various ways (such as using a head mount display with a dedicated card slot), where through wired or wireless connection with the mobile terminal, the mobile terminal performs related computations for an extended reality function and outputs data to the mobile extended reality device, for example, watching extended reality videos through an APP of the mobile terminal; and
an all-in-one extended reality device, which includes a processor configured to perform related computations on virtual functions, thus having independent extended reality inputting and outputting functions, without being connected to a PC or a mobile terminal, and has high degree of freedom of use.

Of course, the forms of implementing the extended reality device are not limited to this, and may be further miniaturized or enlarged as needed.

The extended reality device is provided with a sensor (such as a nine-axis sensor), to detect a change in the pose of the extended reality device in real time. If a user wears the extended reality device, when the pose of the head of the user changes, the real-time pose of the head will be transmitted to the processor, thereby computing a gaze point of the line of sight of the user in a virtual environment. An image, which is in a gaze range (i.e. the virtual field of view) of the user, in a three-dimensional model of the virtual environment is calculated according to the gaze point and is displayed on a display screen, so that the user has an immersive experience as if the user watches videos in a real environment.

FIG. 3 shows an optional schematic diagram of a virtual field of view of an extended reality device provided according to an embodiment of the present disclosure. A horizontal field of view and a vertical field of view are used to describe a distribution range of a virtual field of view in a virtual environment. The distribution range in a vertical direction is represented by a vertical field of view BOC, and the distribution range in a horizontal direction is represented by a horizontal field of view AOB. The human eyes can always perceive images located in the virtual field of view in the virtual environment through a lens. It may be understood that a larger field of view reflects a larger size of the virtual field of view, and an area of the virtual environment that may be perceived by a user is larger. Field of view represents a distribution range of a viewing angle when an environment is perceived through a lens. For example, the field of view of an extended reality device represents a distribution range of a viewing angle of the human eyes when a virtual environment is perceived through a lens of the extended reality device. For another example, for a mobile terminal with a Webcam, the field of view of the Webcam is a distribution range of a viewing angle obtained when the Webcam takes a photograph of a real environment perceived.

The extended reality device, such as an HMD, is integrated with several cameras (such as a depth camera and an RGB camera), and the purpose of the cameras is not limited to providing through views. Camera images and an integrated inertial measurement unit (IMU) provide data that may be processed through a computer vision method to automatically analyze and understand an environment. In addition, the HMD is designed to support not only passive computer vision analysis, but also active computer vision analysis. The passive computer vision method analyzes image information captured from an environment. These methods may be a single field of view (images from a single camera) or a stereo view (images from two cameras). The methods include, but are not limited to, feature tracking, object recognition, and depth estimation. The active computer vision method adds information to an environment by projecting patterns that are visible to a camera but not necessarily to a human vision system. This type of technology includes a Time of Flight (ToF) camera, laser scanning, or structured light, to simplify the stereo matching problem. The active computer vision is used for achieving deep construction of a scenario.

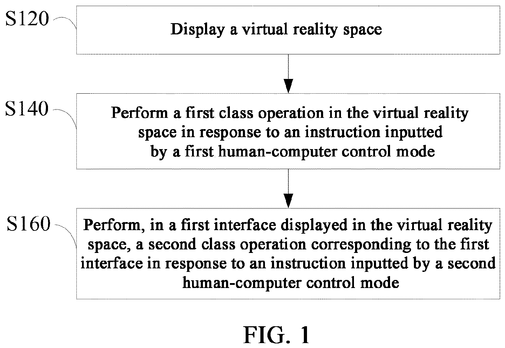

Referring to FIG. 1, FIG. 1 is a flowchart of an extended reality-based interaction control method 100 provided according to an embodiment of the present disclosure. The method 100 includes step S 120 to step S160.

Step S 120: display a virtual reality space.

The virtual reality space may be a simulated environment of a real world, a semi-simulated and semi-fictional virtual scenario, or a purely fictional virtual scenario. The virtual scenario may be any one of a two-dimensional virtual scenario, a 2.5-dimensional virtual scenario or a three-dimensional virtual scenario, and the embodiments of the present application do not limit a dimension of the virtual scenario. For example, the virtual scenario may include a sky, a land, an ocean, and the like. The land includes environmental elements such as a desert and a city. A user may control a virtual player to move in the virtual scenario.

Step S 140: perform a first class operation in the virtual reality space in response to an instruction inputted by a first human-computer control mode.

Step S 160: perform a second class operation corresponding to the first interface, in a first interface displayed in the virtual reality space, in response to an instruction inputted by a second human-computer control mode.

In some embodiments, the first class operation includes a navigation operation performed in the virtual reality space; and the second class operation includes a control operation performed on a controllable object in the first interface. The navigation operation is used for locating an object displayed in the virtual reality space by using a visual representation such as a cursor, a ray, and highlight. Exemplarily, the navigation control mode includes a ray control mode. In the ray control mode, a virtual ray may be displayed in the virtual reality space. The virtual ray will change a pointing direction of the virtual ray based on a pose of the controller in a real space. In this way, a user may select a virtual object in the virtual reality space through the virtual ray by manipulating the controller.

The control operation performed on the controllable object includes operations such as copying, cutting, pasting, inserting, and moving performed on the controllable object, or an operation of editing the properties of the controllable object (such as renaming and formatting), but the present disclosure is not limited to this.

In some embodiments, the first and second human-computer control modes may be of the same type. For example, the first human-computer control mode is based on a first controller, and the second human-computer control mode is based on a second controller. In a specific implementation, the first controller and the second controller are controllers with the same control capabilities. Exemplarily, the first controller and the second controller are VR gamepads adapted to the left and right hands.

In some embodiments, the first and second human-computer control modes may be different types of control modes. For example, the first and second human-computer control modes are any two different types of control modes, including somatosensory control, eye movement control, touch control, external controller control, gesture control, voice control, and the like. Exemplarily, the first human-computer control mode may be gesture control, and the second human-computer control mode may be touch control, voice control, or eye movement control, or the first human-computer control mode may be eye movement control, and the second human-computer control mode may be touch control, voice control, or gesture control. However, the present disclosure is not limited to this.

The first interface is a graphical user interface displayed in the virtual reality space, including but not limited to a page, a window, a component, and other display forms.

According to one or more embodiments of the present disclosure, by performing a first class operation in the virtual reality space in response to an instruction inputted by a first human-computer control mode; and performing, in a first interface displayed in the virtual reality space, a second class operation corresponding to the first interface in response to an instruction inputted by a second human-computer control mode, users may interact with each other in the virtual reality space by using the first human-computer control mode, and an interaction operation performed on the first interface may be performed through the second human-computer control mode, thereby improving the interaction efficiency; and the targeted second class operation may not affect the first class operation.

In some embodiments, before step S 160 is executed, the method 100 further includes: in response to a preset instruction inputted by the first human-computer control mode, a target component associated with the second human-computer control mode is determined, wherein the target component is configured to control the first interface. Step S160 further includes: performing a second operation performed on the target component in the first interface.

Exemplarily, a component of the first interface may be preset as the target component corresponding to the second human-computer control mode, and the target component is configured to be able to be mapped with the second human-computer control mode after the device receives the preset instruction, so as to perform a response to the instruction inputted by the second human-computer control mode.

According to one or more embodiments of the present disclosure, the target component corresponding to the second human-computer control mode is determined by making a response to the preset instruction inputted by the first human-computer control mode, and the instruction inputted by the second human-computer control mode is applied to the target component. Therefore, a user may use the second human-computer control mode to directly control the target component on the first interface when using the first human-computer control mode. This provides a foundation for the coordinated use of the first and second human-computer control modes, enriches the application scenarios of the second human-computer control mode, improves the control efficiency of the second human-computer control mode, and then improves the interaction efficiency of users in an extended reality scenario.

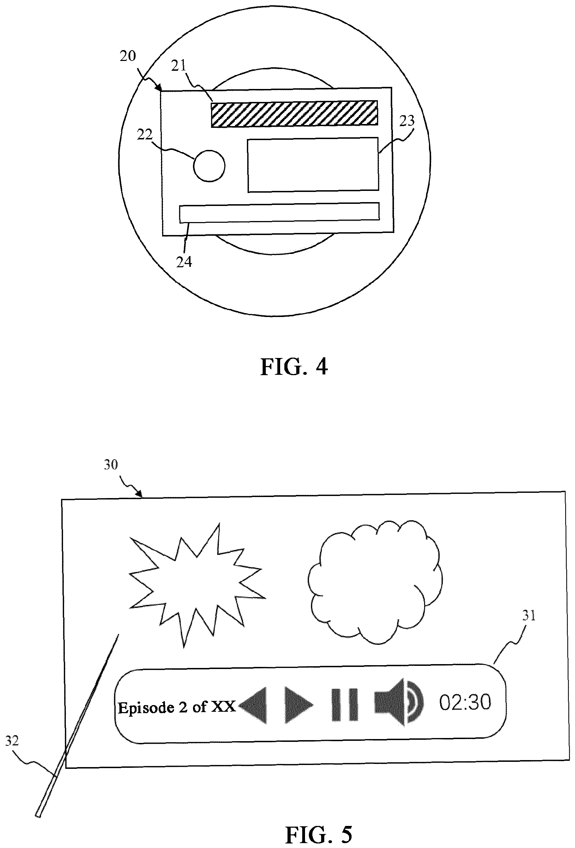

Exemplarily, referring to FIG. 4, a first interface 20 is currently displayed in a virtual reality space 10, and a first interface 20 includes a plurality of regional components 21, 22, 23, and 24. Each regional component undertakes different control functions for the first interface 20. Regional component 21 is pre-selected as a target component. When a user triggers a preset instruction using a first controller (for example, entering a gamepad ray mode by using the first controller), a second controller may enter an activated state from an inactive state (e.g. a sleep state), and a first control instruction of the second controller establishes a mapping relationship with regional component 21. The first control instruction sent by the second controller will be automatically and only applied to regional component 21, and will not affect other regional components. No matter what poses the first and second controllers are in (for example, neither the first controller nor the second controller points to regional component 21), the first control instruction sent by the second controller may still directly and automatically control regional component 21, and a user does not need to lock regional component 21 in advance through, for example, a gamepad ray. In some embodiments, the first control instruction may be one or more particular instructions sent in the second human-computer control mode. For example, the first control instruction may be an instruction sent by a particular button or button combination on the second controller.

It may be understood that the target component may be displayed in real time at a preset position inside or outside the first interface. The target component may be called out in response to a preset operation of a user, or may be invisible to a user. The present disclosure is not limited to this.

In some embodiments, the target component may be called out in the first interface in response to the instruction inputted by the first human-computer control mode, or the target component may be automatically associated with the second human-computer control mode in the first interface in response to the instruction inputted by the first human-computer control mode, so as to lock the target component in the second human-computer control mode.

In some embodiments, the first interface may include, but is not limited to, a video playing interface, a file management interface, an input method interface, a document editing interface, or the like.

In some embodiments, if the first interface is the video playing interface, the second class operation includes an operation for controlling a video playing progress and/or an operation for controlling a video playing volume; or, if the first interface is the file management interface, the second class operation includes a file editing operation; or, if the first interface is the input method interface, the second class operation includes a switch or confirm operation performed on candidate phrases; or, if the first interface is the document editing interface, the second class operation includes an object editing operation. The file editing operation includes, but is not limited to, copying, cutting, pasting, moving, or inserting files, or an operation of editing the properties of a file (such as renaming a file). The object editing operation includes, but is not limited to, copying, cutting, pasting, moving, or inserting an object in the document editing interface, or an operation of editing the properties of an object (such as modifying the format of an object). However, the present disclosure is not limited to this.

In a specific implementation, referring to FIG. 5, if a video playing interface 30 is displayed in a current virtual reality space, in response to a first controller entering a navigation control mode (for example, controlling a ray 32 to perform interactions), an instruction sent by a second controller may be automatically applied to a video playing control component 31 corresponding to the video playing interface. The video playing control component 31 may be configured to, for example, adjust the playing progress (e.g. fast forward, backward, and pause), the volume of a video, and the light of the video. For example, the second controller is provided with a joystick, and a user may directly control the volume of the video by pulling the joystick back and forth, and control the playing progress of the video by pulling the joystick left and right. However, the present disclosure is not limited to this. In this way, a user may lock the video playing component in advance through, for example, the gamepad ray, namely, directly trigger a video control function provided by the video playing component through the second controller. In some embodiments, in response to the first controller entering the navigation control mode, the video playing control component 31 may be called out in the video playing interface 30, and the second controller may be associated with the video playing control component 31.

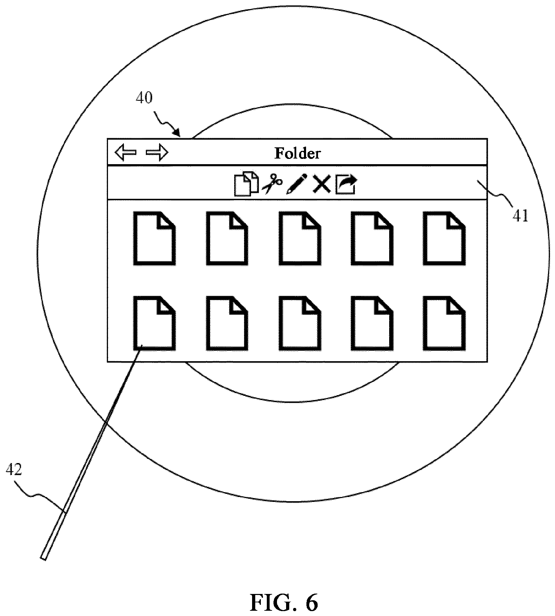

In a specific implementation, referring to FIG. 6, if a file management interface 40 is displayed in a current virtual reality space, in response to a first controller entering a navigation control mode, an instruction sent by a second controller may be automatically applied to a file management component 41 corresponding to the file management interface. The file management component 41 may be, for example, configured to copy, cut, delete, rename, or send one or more files displayed on the file management interface 40. For example, a user may select a file displayed on the file management interface 40 through a gamepad ray 42 of the first controller, and may directly trigger a preset button of the second controller to trigger a deletion function provided by the file management component 41, to conveniently delete the file, so that the user does not need to lock a deletion button in the file management component 41 in advance through, for example, the gamepad ray, thereby improving the file management efficiency. In some embodiments, in response to the first controller entering the navigation control mode, the file management component 41 may be called out in the file management interface 40, and the second controller may be associated with the file management component 41.

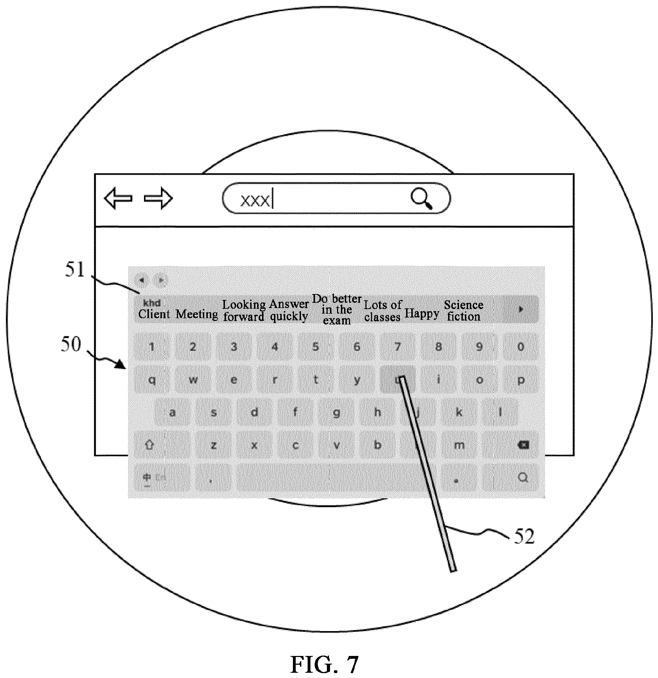

In a specific implementation, referring to FIG. 7, if an input method interface 50 is displayed in a current virtual reality space, in response to a first controller entering a navigation control mode, an instruction sent by a second controller may be automatically applied to a candidate phrase display component 51 corresponding to the input method interface. The candidate phrase display component 51 may display one or more candidate phrases determined based on characters (such as pinyin) entered by a user for selection by the user. According to the method provided by an embodiment of the present disclosure, the navigation mode of the first controller may be mapped to global buttons of a virtual keyboard provided on the input method interface through a ray 52, so that a user selects the buttons to enter characters through the first controller, and the instruction of the second controller may be automatically and only mapped to the candidate phrase display component 51, so that the user controls the candidate phrase display component through the second controller, for example, selecting candidate phrases provided by the candidate phrase display component 51 and confirming the selected candidate phrases, or controlling display content of the candidate phrase display component (e.g. page turning), and the user does not need to lock the candidate phrase display component 51 in advance through a gamepad ray. In some embodiments, in response to the first controller entering the navigation control mode, the candidate phrase display component 51 in the input method interface 50 may be associated with the second controller.

It can be understood that the extended reality-based interaction control method provided by the present disclosure may be further applied to other types of first interfaces, which will not be elaborated here.

In some embodiments, different target components may be preset for different first interfaces, and these different target components have mapping relationships with the second human-computer control mode, so that the second human-computer control mode may be mapped to different target components under different interfaces, thereby enabling the second human-computer control mode to adaptively execute corresponding functions on the interfaces.

In some embodiments, the target component is configured to only perform a response to the instruction inputted by the second human-computer control mode after receiving the preset instruction. In this embodiment, when a user enters the preset instruction in the first human-computer control mode, the target component is only mapped to the second human-computer control mode, and only makes a response to the instruction inputted by the second human-computer control mode, so that the control performed by the user on the target component will not affect the use of the first human-computer control mode.

In some embodiments, in response to the preset instruction inputted by the first human-computer control mode, a unique mapping relationship may be established between the second human-computer control mode and the target component. The following takes the first and second human-computer control modes being control modes based on the first and second controllers as an example for explanation. After the user enters the preset instruction through the first controller, the unique mapping relationship is established between the second controller and the target component, so that the target component may be only controlled by the instruction of the second controller, and the instruction of the second controller may be only applied to the target component. Thus, mis-operations caused by disharmony of simultaneous use of the first and second controllers may be reduced.

In some embodiments, a regional component corresponding to the first interface may be selected as a target component in advance.

In some embodiments, target components with different control functions may be selected in advance for different types of first interfaces, so that the first control instruction of the second controller may achieve different control functions in different application scenarios.

In some embodiments, if a plurality of first interfaces are currently displayed in the virtual reality space, a first interface that is to be controlled by the second controller is determined based on the following step: A first interface that is being used by a user or is last used by a user is determined as the first interface that is to be controlled by the second controller.

In a specific implementation, if a plurality of first interfaces are currently displayed in the virtual reality space, a first interface with a focus may be used as the first interface that is to be controlled by the second controller, so that the first control instruction of the second control may control the first interface through the target component corresponding to the first interface.

In a specific implementation, the time that the various first interfaces are used by the user may be recorded. If a plurality of first interfaces are currently displayed in the virtual reality space, a first interface that is last used by the user may be used as the first interface that is to be controlled by the second controller, so that the first control instruction of the second control may control the first interface through the target component corresponding to the first interface.

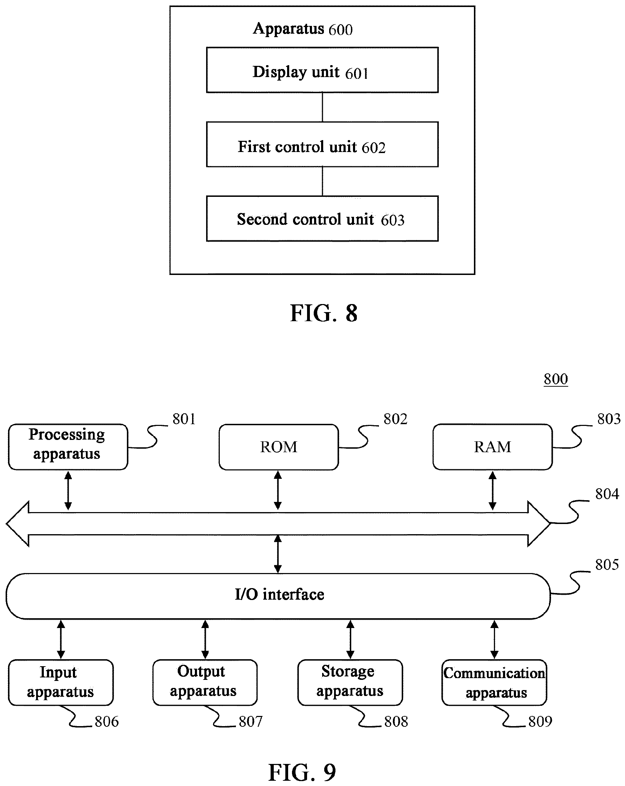

Correspondingly, referring to FIG. 8, an embodiment of the present disclosure provides an information interaction apparatus 600, including:
a display unit 601, configured to display a virtual reality space;
a first control unit 602, configured to perform a first class operation in the virtual reality space in response to an instruction inputted by a first human-computer control mode; and
a second control unit 603, configured to perform, in a first interface displayed in the virtual reality space, a second class operation corresponding to the first interface in response to an instruction inputted by a second human-computer control mode.

In some embodiments, the first class operation includes a navigation operation performed in the virtual reality space; and the second class operation includes a control operation performed on a controllable object in the first interface.

In some implementations, the information interaction apparatus further includes:
a component determining unit, configured to: in response to a preset instruction inputted by the first human-computer control mode, determine a target component associated with the second human-computer control mode, wherein the target component is configured to control the first interface; and
the second control unit is configured to perform, in the first interface, a second operation performed on the target component.

In some implementations, the information interaction apparatus further includes:
a component setting unit, configured to preset the target component of the first interface corresponding to the second human-computer control mode,; and
the component determining unit is configured to establish a mapping relationship between the target component and the second human-computer control mode to enable the target component to perform a corresponding response to the instruction inputted by the second human-computer control mode.

In some embodiments, different first interfaces correspond to different target components; and the different target components have mapping relationships with the second human-computer control mode.

In some embodiments, the first interface includes a video playing interface, a file management interface, an input method interface, or a document editing interface.

In some embodiments, if the first interface is the video playing interface, the second class operation includes an operation for controlling a video playing progress and/or an operation for controlling a video playing volume; or, if the first interface is the file management interface, the second class operation includes a file editing operation; or, if the first interface is the input method interface, the second class operation includes a switch or confirm operation performed on candidate phrases; or, if the first interface is the document editing interface, the second class operation includes an object editing operation.

In some embodiments, if a plurality of first interfaces are currently displayed in the virtual reality space, a first interface that is to be controlled by the second human-computer control mode is determined based on the following step: A first interface that is being used by a user or is last used by a user is determined as the first interface that is to be controlled by the second human-computer control mode.

The apparatus embodiment basically corresponds to the method embodiment, so that for related parts, refer to some of the descriptions in the method embodiment. The apparatus embodiment described above is only illustrative, and the modules described as separate components may or may not be separated. Some or all of the modules are selected according to actual needs to achieve the objective of the solution of this embodiment. Those of ordinary skill in the art may understand and implement the present disclosure without creative work.

Correspondingly, according to one or more embodiments of the present disclosure, an electronic device is provided, including:
at least one memory and at least one processor.

The memory is configured to store a program code; the processor is configured to call the program code stored in the memory to cause the electronic device to perform the extended reality-based interaction control method provided according to one or more embodiments of the present disclosure.

Correspondingly, according to one or more embodiments of the present disclosure, a non-transient computer storage medium is provided, having a program code stored thereon, wherein the program code, when may be executed by a computer device, causes the computer device to perform the extended reality-based interaction control method provided according to one or more embodiments of the present disclosure.

Referring to FIG. 9 below, it illustrates a schematic structural diagram of an electronic device (namely, a terminal device or a server) 800 suitable for implementing an embodiment of the present disclosure. The terminal device in the embodiments of the present disclosure may include, but is not limited to, a mobile phone, a laptop, a digital broadcast receiver, a Personal Digital Assistant (PDA), a Portable Android Device (PAD), a Portable Media Player (PMP), a mobile terminal such as a vehicle-mounted terminal (for example, a vehicle-mounted navigation terminal), and a fixed terminal such as digital television (TV) and a desktop computer. The electronic device shown in FIG. 9 is only an example and should not impose any limitations on the functionality and scope of use of the embodiments of the present disclosure.

As shown in FIG. 9, the electronic device 800 may include a processing apparatus (e.g. a central processing unit and a graphics processing unit) 801 that may perform various appropriate actions and processing according to programs stored in a Read-Only Memory (ROM) 802 or loaded from a storage apparatus 808 to a Random Access Memory (RAM) 803. Various programs and data required for operations of the electronic device 800 may alternatively be stored in the RAM 803. The processing apparatus 801, the ROM 802, and the RAM 803 are connected to each other through a bus 804. An Input/Output (I/O) interface 805 is also connected to the bus 804.

Usually, the following apparatuses may be connected to the I/O interface 805: an input apparatus 806 including a touch screen, a touchpad, a keyboard, a mouse, a camera, a microphone, an accelerometer, a gyroscope, and the like; an output apparatus 807 including a Liquid Crystal Display (LCD), a speaker, a vibrator, and the like; a storage apparatus 808 including a magnetic tape, a hard disk drive, and the like; and a communication apparatus 809. The communication apparatus 809 may allow the electronic device 800 to wirelessly or wiredly communicate with other devices to exchange data. Although FIG. 9 shows the electronic device 800 with multiple apparatuses, it should be understood that the electronic device is not required to implement or have all the apparatuses shown, and can alternatively implement or have more or fewer apparatuses.

Particularly, according to the embodiments of the present disclosure, the process described in the reference flowchart above can be implemented as a computer software program. For example, the embodiments of the present disclosure include a computer program product, including a computer program carried on a computer-readable medium, and the computer program includes program codes used for performing the methods shown in the flowcharts. In such an embodiment, the computer program may be downloaded and installed from a network through the communication apparatus 809, or installed from the storage apparatus 808, or installed from the ROM 802. When the computer program is executed by the processing apparatus 801, the above-mentioned functions defined in the methods of the embodiments of the present disclosure are executed.

It should be noted that the computer-readable medium mentioned in the present disclosure can be a computer-readable signal medium, a computer-readable storage medium, or any combination of the computer-readable signal medium and the computer-readable storage medium. The computer-readable storage medium can be, for example, but not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard disk drive, a RAM, a ROM, an Erasable Programmable Read Only Memory (EPROM) or flash memory, an optical fiber, a Compact Disc Read-Only Memory (CD-ROM), an optical storage device, a magnetic storage device, or any suitable combination of the above. In the present disclosure, the computer-readable storage medium may be any tangible medium that contains or stores a program, and the program can be used by or in combination with an instruction execution system, apparatus, or device. In the present disclosure, the computer-readable signal media may include data signals propagated in a baseband or as part of a carrier wave, which carries computer-readable program codes. The propagated data signals can be in various forms, including but not limited to: electromagnetic signals, optical signals, or any suitable combination of the above. The computer-readable signal medium may also be any computer-readable medium other than a computer-readable storage medium. The computer-readable signal medium can send, propagate, or transmit programs for use by or in combination with an instruction execution system, apparatus, or device. The program codes contained in the computer-readable medium can be transmitted using any suitable medium, including but are not limited to: a wire, an optical cable, a Radio Frequency (RF), and the like, or any suitable combination of the above.

In some implementations, clients and servers can communicate using any currently known or future developed network protocol such as a HyperText Transfer Protocol (HTTP), and can intercommunicate and be interconnected with digital data in any form or medium (for example, a communication network). Examples of the communication network include a Local Area Network (LAN), a Wide Area Network (WAN), an internet (such as an Internet), a point-to-point network (such as an ad hoc point-to-point network, and any currently known or future developed network.

The computer-readable medium may be included in the electronic device or exist alone and is not assembled into the electronic device.

The above computer-readable medium carries one or more programs. When run by the electronic device, the one or more programs cause the electronic device to implement the above method of the present disclosure.

Computer program codes for performing the operations of the present disclosure may be written in one or more programming languages or a combination thereof. The above programming languages include an object-oriented programming language such as Java, Smalltalk, and C++, and conventional procedural programming languages such as "C" language or similar programming languages. The program codes may be executed entirely on a user computer, partly on a user computer, as a stand-alone software package, partly on a user computer and partly on a remote computer, or entirely on a remote computer or a server. In a case where a remote computer is involved, the remote computer can be connected to a user computer through any kind of networks, including a LAN or a WAN, or can be connected to an external computer (for example, through an Internet using an Internet service provider).

The flowcharts and block diagrams in the accompanying drawings illustrate possible system architectures, functions, and operations that may be implemented by a system, a method, and a computer program product according to various embodiments of the present disclosure. In this regard, each block in a flowchart or a block diagram may represent a module, a program, or a part of a code. The module, the program, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. It is also noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of the present disclosure can be implemented through software or hardware. The name of the unit does not constitute a limitation on the unit itself in a situation.

The functions described herein above may be performed, at least in part, by one or a plurality of hardware logic components. For example, non-restrictively, example hardware logic components that can be used include: Field Programmable Gate Array (FPGA), an Application Specific Integrated Circuit (ASIC), Application Specific Standard Parts (ASSP), a System on Chip (SOC), a Complex Programmable Logic Device (CPLD), and the like.

In the context of the present disclosure, a machine-readable medium may be a tangible medium that may include or store a program for use by an instruction execution system, apparatus, or device or in connection with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable medium may include an electrical connection based on one or more wires, a portable computer disk, a hard disk drive, a RAM, a ROM, an EPROM or flash memory, an optical fiber, a CD-ROM, an optical storage device, a magnetic storage device, or any suitable combinations of the above contents.

According to one or more embodiments of the present disclosure, an extended reality-based interaction control method is provided, including: displaying a virtual reality space; performing a first class operation in the virtual reality space in response to an instruction inputted by a first human-computer control mode; and performing, in a first interface displayed in the virtual reality space, a second class operation corresponding to the first interface in response to an instruction inputted by a second human-computer control mode.

According to one or more embodiments of the present disclosure, the first class operation includes a navigation operation performed in the virtual reality space; and the second class operation includes a control operation performed on a controllable object in the first interface.

According to one or more embodiments of the present disclosure, before the performing, in a first interface displayed in the virtual reality space, a second class operation corresponding to the first interface in response to an instruction inputted by a second human-computer control mode, the method further includes: in response to a preset instruction inputted by the first human-computer control mode, determining a target component associated with the second human-computer control mode, wherein the target component is configured to control the first interface; and the performing a second class operation in the first interface includes: performing, in the first interface, a second operation performed on the target component.

According to one or more embodiments of the present disclosure, the method further includes: presetting the target component of the first interface corresponding to the second human-computer control mode,; and the determining a target component associated with the second human-computer control mode includes: establishing a mapping relationship between the target component and the second human-computer control mode to enable the target component to make a corresponding response to the instruction inputted by the second human-computer control mode.

According to one or more embodiments of the present disclosure, different first interfaces correspond to different target components; and the different target components have mapping relationships with the second human-computer control mode.

According to one or more embodiments of the present disclosure, the first interface includes a video playing interface, a file management interface, an input method interface, or a document editing interface.

According to one or more embodiments of the present disclosure, if the first interface is the video playing interface, the second class operation includes an operation for controlling a video playing progress and/or an operation for controlling a video playing volume; or, if the first interface is the file management interface, the second class operation includes a file editing operation; or, if the first interface is the input method interface, the second class operation includes a switch or confirm operation performed on candidate phrases; or, if the first interface is the document editing interface, the second class operation includes an object editing operation.

According to one or more embodiments of the present disclosure, if a plurality of first interfaces are currently displayed in the virtual reality space, a first interface that is to be controlled by the second human-computer control mode is determined based on the following step: determining a first interface that is being used by a user or is last used by a user as the first interface that is to be controlled by the second human-computer control mode.

According to one or more embodiments of the present disclosure, an extended reality-based information interaction apparatus is provided, including: a display unit, configured to display a virtual reality space; a first control unit, configured to perform a first class operation in the virtual reality space in response to an instruction inputted by a first human-computer control mode; and a second control unit, configured to perform, in a first interface displayed in the virtual reality space, a second class operation corresponding to the first interface in response to an instruction inputted by a second human-computer control mode. According to one or more embodiments of the present disclosure, an electronic device is provided, including: at least one memory and at least one processor, wherein the memory is configured to store a program code; the processor is configured to call the program code stored in the memory to cause the electronic device to perform the extended reality-based interaction control method provided according to one or more embodiments of the present disclosure.

According to one or more embodiments of the present disclosure, a non-transient computer storage medium is provided, having a program code stored thereon, wherein the program code, when executed by a computer device, causes the computer device to perform the extended reality-based interaction control method provided according to one or more embodiments of the present disclosure.

The above description is only for explaining the preferred embodiments of the present disclosure and technical principles used in the embodiments. Those skilled in the art should understand that the scope of disclosure referred to in the present disclosure is not limited to the technical solutions formed by specific combinations of the aforementioned technical features, but also covers other technical solutions formed by any combinations of the aforementioned technical features or their equivalent features without departing from the concept of the above disclosure, for example, a technical solution formed by replacing the above features with (but not limited to) technical features with similar functions disclosed in the present disclosure.

In addition, although various operations are depicted in a specific order, this should not be understood as requiring these operations to be executed in the specific order shown or in a sequential order. In certain environments, multitasking and parallel processing may be advantageous. Similarly, although several specific implementation details are included in the above discussion, these should not be interpreted as limiting the scope of the present disclosure. Some features described in the context of individual embodiments can also be combined and implemented in a single embodiment. On the contrary, various features that are described in the context of the single embodiment may also be implemented in a plurality of embodiments separately or in any suitable sub-combinations.

Although the subject matter has been described in a language specific to structural features and/or method logical actions, it should be understood that the subject matter limited in the attached claims may not necessarily be limited to the specific features or actions described above. On the contrary, the specific features and actions described above are only exemplary forms for implementing the claims.

## Claims

1. A method for extended reality-based interaction control, comprising:
displaying (S120) a virtual reality space;
performing (S140) a first class operation in the virtual reality space in response to an instruction inputted by a first human-computer control mode; and
performing (S160), in a first interface displayed in the virtual reality space, a second class operation corresponding to the first interface in response to an instruction inputted by a second human-computer control mode.

2. The method of claim 1, wherein
the first class operation comprises a navigation operation performed in the virtual reality space; and
the second class operation comprises a control operation performed on a controllable object in the first interface.

3. The method of claim 1, wherein before performing, in the first interface displayed in the virtual reality space, the second class operation corresponding to the first interface in response to the instruction inputted by the second human-computer control mode, the method further comprises:
in response to a preset instruction inputted by the first human-computer control mode, determining a target component associated with the second human-computer control mode, wherein the target component is configured to control the first interface; and
wherein performing the second class operation in the first interface comprises: performing, in the first interface, a second operation for the target component.

4. The method of claim 3, further comprising: presetting the target component of the first interface corresponding to the second human-computer control mode, wherein
determining the target component associated with the second human-computer control mode comprises: establishing a mapping relationship between the target component and the second human-computer control mode to enable the target component to execute corresponding response to the instruction inputted by the second human-computer control mode.

5. The method of claim 4, wherein different first interfaces correspond to different target components; and the different target components have mapping relationships with the second human-computer control mode.

6. The method of claim 1, wherein the first interface comprises a video playing interface, a file management interface, an input method interface, or a document editing interface.

7. The method of claim 6, wherein
in response to the first interface being the video playing interface, the second class operation comprises an operation for controlling a video playing progress and/or an operation for controlling a video playing volume; or
in response to the first interface being the file management interface, the second class operation comprises a file editing operation; or
in response to the first interface being the input method interface, the second class operation comprises a switch operation or confirm operation on candidate phrases; or
in response to the first interface being the document editing interface, the second class operation comprises an object editing operation.

8. The method of claim 1, wherein in response to a plurality of first interfaces being currently displayed in the virtual reality space, determining, based on the following step, a first interface that is to be controlled in the second human-computer control mode:
determining a first interface that is being used by a user or is last used by a user as the first interface that is to be controlled in the second human-computer control mode.

9. An extended reality-based information interaction apparatus (600), comprising:
a display unit (601), configured to display a virtual reality space;
a first control unit (602), configured to perform a first class operation in the virtual reality space in response to an instruction inputted by a first human-computer control mode; and
a second control unit (603), configured to perform, in a first interface displayed in the virtual reality space, a second class operation corresponding to the first interface in response to an instruction inputted by a second human-computer control mode.

10. An electronic device (800), comprising:
at least one memory and at least one processor (801),
wherein the memory is configured to store a program code; the processor is configured to call the program code stored in the memory to cause the electronic device to perform the method according to any of claims 1 to 8.

11. A non-transient computer storage medium,
wherein the non-transient computer storage medium stores a program code, and the program code, when executed by a computer device, causes the computer device to perform the method according to any of claims 1 to 8.
